# EUROPEAN PATENT SPECIFICATION

(11) **EP 0 636 313 B1**
(45) Date of publication and mention of the grant of the patent: **24.03.1999**
(21) Application number: 94202169.2
(22) Date of filing: 25.07.1994
(51) Int. Cl.: A01K 1/12, A01K 15/02, A01K 11/00, A01J 7/00

(54) **A construction for automatically milking animals**
Vorrichtung zum automatischen Melken von Tieren
Appareil de traite automatique d'animaux

(30) Priority: 28.07.1993 NL 9301317
(43) Date of publication of application: 01.02.1995
(73) Proprietor: MAASLAND N.V., 3155 PD Maasland (NL)
(72) Inventor: van der Lely, Cornelis, CH-6300 Zug (CH)
(74) Representative: Corten, Maurice Jean F.M.

(56) References cited:
- EP-A- 0 189 954
- EP-A- 0 332 230
- FR-A- 1 576 765
- NL-A- 8 104 807

## Description

The present invention relates to a construction or a similar arrangement for automatically milking animals, such as cows, comprising a milking box and a plurality of resting boxes, the construction furthermore comprising compelling means.

Such a construction is known from NL-A-8104807.

In this construction all the animals together are driven by an electric fence. Sometimes it is favourable to compel an individual animal.

It is an object of the invention to have a construction of the above defined type wherein it is possible to compel selected animals in a herd.

According to the invention this is achieved in that a resting box includes the means for compelling the animal resting in the resting box to leave same and the resting box includes a cow identification sensor which, together with a transponder to be carried by the animal, forms part of a cow identification system, the resting box furthermore includes a warning member for warning animals not to enter the resting box, or to warn an animal present in the resting box to leave same.

The construction according to the invention makes it more certain that a selected animal will be milked at a predetermined instant, preferably e.g. eight hours, after the preceding milking. By means of the warning member an animal can be prevented from entering a resting box, e.g. because an animal has already left an other resting box with the purpose of going to the milking box, or because too little time has elapsed since the previous milking run, so that the teats of the animal milked have closed or dried insufficiently. The warning member may be constituted by a computer-controlled flashing light which, preferably, is screened off in such a manner that it is not visible in other resting boxes.

For the purpose of obviating symptoms of a disease, more specifically those relating to the udder, to the best possible extent, it is advantageous, in accordance with the invention, for a resting box to be equipped with a disinfecting unit for disinfecting the area where an animal has been lying, after it has left the resting box. To that end, a line may run along the resting boxes for the supply of a disinfectant, whilst sprayers having a computer-controlled valve can be connected thereto.

In addition, a power supply cable will be run along the resting boxes as well as a process control cable for the individual resting boxes. By means of the process control cables, it will be possible to control from a remote computer system a warning member and/or expelling member and/or disinfecting unit present in a resting box.

So as to create sufficient room for the animals to walk about, an efficient lay-out of the construction is desirable. For that purpose, the resting boxes are preferably arranged along the outer wall of the construction. According to the invention, both the outer wall of the construction near the resting boxes and the floor of the resting boxes must be provided with a thermal insulation. In addition, arranged along the outer walls of the construction there may be feeding stations which are placed nearer to the centre of the construction, so that there is a walking area between the resting boxes and the feeding stations and the animals can walk in a given direction through the shed. By incorporating in this walking area a milking box with at least one milking robot for the automatic connection of teat cups to the teats of an animal and for the automatic milking of an animal, an adequate circulation of the animals through the construction is rendered possible, whilst the animals have ample opportunity to rest and feed.

For a better understanding of the invention and to show how the same may be carried into effect, reference will now be made, by way of example, to an embodiment shown in the accompanying drawings, in which:
Figure 1 illustrates the arrangement of the construction for automatically milking animals in accordance with the invention;
figure 2 is a side view of a resting box in the construction shown in Figure 1;
Figure 3 is a plan view of such a resting box;

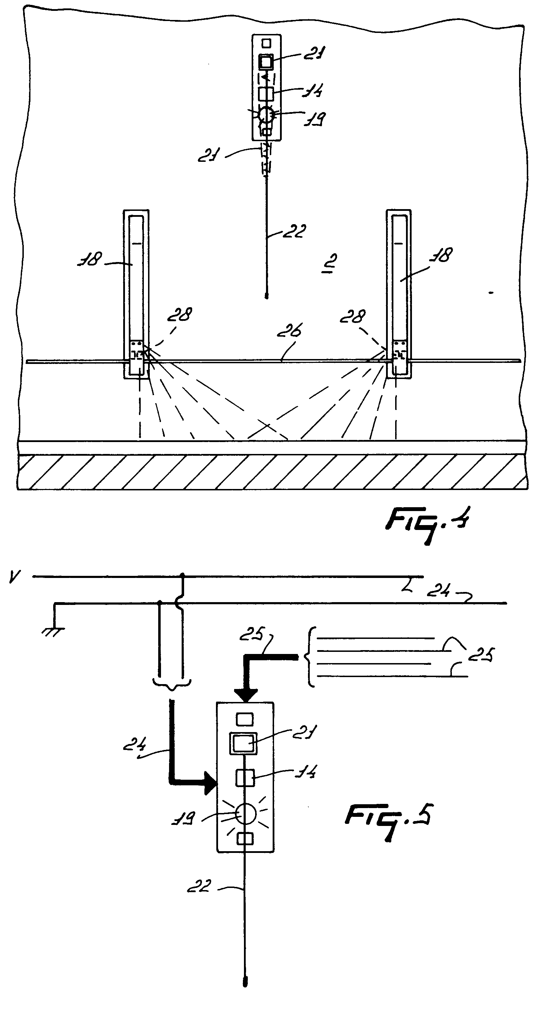

Figure 4 is a view of a resting box from the side via which an animal can enter same, and
Figure 5 illustrates the electronic means provided in a resting box.

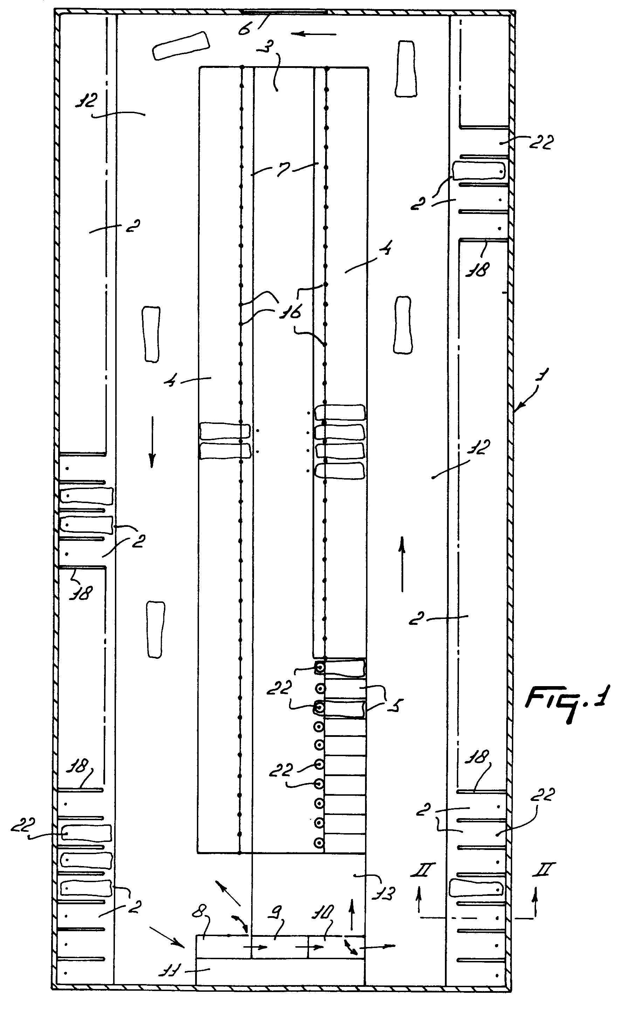

The construction for automatically milking animals shown in Figure 1 is here formed by a shed 1, in which resting boxes 2 are arranged at the two longitudinal sides thereof against the outer wall. Feeding stations 4 and 5 are arranged on both sides of a feeding passage 3. With the aid of a tractor driving in the feeding passage 3, fodder can be carried via the door 6 in the shed 1 to the feeding troughs 7 of the feeding stations 4. Besides feeding stations in which fodder can be fed to the animals, there are feeding stations 5 in which concentrate is fed to the animals. The arrangement of the resting boxes 2 and the feeding stations 4 and 5 is such that sufficient room for the animals to walk between the resting boxes and the feeding stations remain, so that they can move about to a sufficient extent and can basically walk around the shed. At the short side of the shed, opposite the short side in which the door 6 is present, there are a number of special boxes, namely a selection box 8, a cleaning box 9 and a milking box 10. These three boxes are arranged such that animals can pass through the three boxes in the said sequence in the longitudinal direction. Next to these three boxes there is a computer room 11, from which the actions to be performed in the selection box 8, the cleaning box 9, the milking box 10, the feeding stations 5 and the resting boxes 2 are controlled. The walking area 12 is formed by the space between the resting boxes 2 and the feeding stations 4 and 5, and the space between the feeding stations 4 and the short side of the shed 1 where the door 6 is located, whilst the possibility for the animals to walk about in the construction is created by the fact that the selection box 8, the cleaning box 9 and the milking box 10 are incorporated in the walking area 12. Of the animals reporting at the selection box 8 it must be determined whether they are to be milked or not. In the negative case, the animals are guided back from the selection box 8 to the walking area 12. If an animal is indeed to be milked, then it is allowed to proceed to the cleaning box 9, where the teats of the animal are cleaned, whereafter the animal is passed on to the milking box 10. In the milking box 10 there is a milking robot for the automatic connection of teat cups to the teats of an animal to be milked and for the subsequent automatic milking of the animal. Should it be found during this milking operation that the milk yield is insufficient, or that the milk is affected by e.g. mastitis, then the relevant ill or unproductive animal can be separated from the herd by leading it from the milking box 10 to a special reception area 13, instead of allowing the milked animal access again to the walking area 12.

In the embodiment shown here, all the resting boxes 2, all the feeding stations 4 and 5, and also the selection box 8 are provided with a cow identification sensor 14 which, together with a transponder 15 to be carried by the animals, forms part of a cow identification system. The cow identification sensors 14 are linked to a computer system in the computer room 11. Thus, using the cow identification system, it can be recorded in the computer which animal is present at any moment in which resting box 2 or in which feeding station 5 and also how long the animals have already rested more particularly in the resting boxes 2.

The feeding stations 4 are separated from each other by vertical posts 16. The feeding stations 5, in which concentrate can be supplied to the animals, are formed by boxes which are separated from each other. Each of the feeding stations 5 is linked to the computer system in the computer room 11, so that it can be recorded for each animal how much concentrate it has consumed, which is important for judging the health condition of the animals.

Since the animals will stay a long time in the resting boxes 2 and these boxes are arranged along the outer wall of the shed, this outer wall, and also the floor of the resting boxes 2, are provided with a thermal insulating means 17. The resting boxes are separated from each other by cubicle partitions 18. All the resting boxes 2, and preferably also all the feeding stations 5, are equipped with a warning member 19 constituted by a flash light. The flash lights are screened off in such a manner that they are not visible in other resting boxes. By means of these flash lights, which can be controlled individually for each box from the computer room 11, the animals can be warned not to enter the relevant resting box 2 or to leave same. When an animal has been warned to leave a resting box or not to enter same, but acts against this warning, the animal can yet be forced to leave the box by using an expelling member 20. This expelling member 20 operates on the basis of electric shocks, and is formed by a spring-loaded electric fence wire which is suspended from a support 21 attached to the shed wall and contacts the head or neck of the animal in a resting box 2. Besides being arranged above the resting boxes 2, such an expelling member 20 can also be applied above the troughs of the concentrate feeding stations 5 and the feeding stations 4. In Figure 1 these electric fence wires of the expelling members 20 are designated by dots 22. The electric fence wire is attached to the support 21 via a conically wound spring. Figure 1 shows the electric fence wire 22 in only a limited number of resting boxes and feeding stations. This wire can of course also be used in other resting boxes and feeding stations. The expelling member 20 operating on the basis of electric fence wire is controlled by the computer system in the computer room 11. The expelling member is then not only controlled in such a manner that at the instant determined by the computer system electric shocks are applied to the animals in the relevant resting boxes or feeding stations, but it is also possible to increase the intensity of the electric shocks gradually and automatically. For an optimum efficiency of the expelling system 20, a ground plate 23 is accommodated in the floor of the relevant boxes and feeding stations.

The supply voltages and control signals required for operating the cow identification sensor 14, the warning member 19 and the expelling member 20 are fed to the relevant resting boxes and feeding stations via a supply voltage wiring system 24 and process control wiring system 25, both shown schematically in Figure 5.

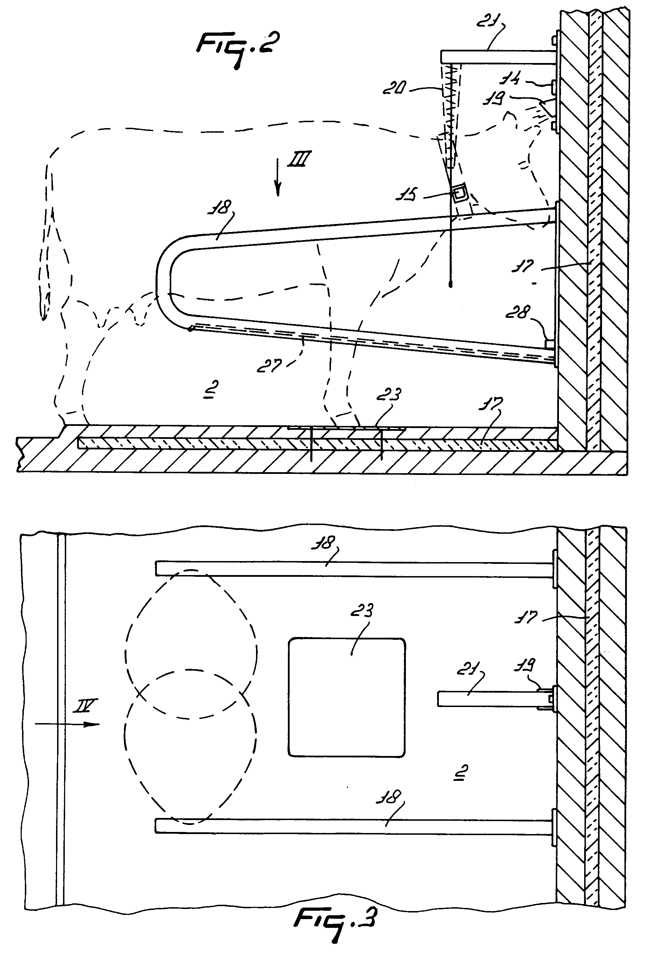

The resting boxes 2 additionally include a disinfecting implement for disinfecting, after an animal has left the relevant resting box, this resting box. To that end, a line 26 for the supply of a disinfectant runs along the resting boxes. Via a line 27, which is connected to this line 26 and runs through or along the cubicle partitions 18 and at its end is provided with a spray nozzle, a disinfecting liquid can be sprayed onto the lying area of the animal in the resting box, as soon as this animal has left same, whilst more specifically is disinfected the place in which the udder contacts the floor. By passing a line 27 having a spray nozzle at its end, in or along the two cubicle partitions 18, a portion of the resting area can be sprayed from both sides. That portion of the resting area which is covered by two of these spray nozzles is denoted in Figure 3 by means of broken lines. Near the point in which the line 27 is connected to the line 26 running along the outer wall there is provided a valve 28 which is controlled by the computer system in the computer room 11, so that a given valve or given valves can be opened at the instant at which it is determined by the computer that an animal has left the resting box.

The shed described here is designed as a loose housing for approximately eighty animals, forty resting boxes having been arranged on either side of the shed and twice forty feeding stations having been arranged in the centre of the shed. When an animal goes to the milking box 10 for being milked, a check is to be made whether it is eligible for milking. If an insufficient period of time after the previous milking turn has elapsed, the animal can be denied access to the milking box 10. Using computer-controlled partitioning means between the selection box 8 and the walking area 12 on the one hand, and between the selection box 8 and the cleaning box 9 on the other, it is possible by means of the cow identification data to establish whether an animal having entered the selection box must be send back to the walking area 12 or may be allowed to proceed to the cleaning box. After having been cleaned and milked, it can be established whether the animal may go to the walking area 12 or must be isolated and be passed to the area 13. During milking of an animal, the amount of the milk yield and the quality of the milk are simultaneously updated. When the yield is too low and/or the milk is affected by e.g. mastitis, this is detected by the computer system and the computer system can control partitioning means between on the one hand the milking box 10 and the collecting area 13 and on the other hand between the milking box 10 and the walking area 12 in that sense that the animal milked is led to either the collecting area 13 or the walking area 12.

After an animal has been milked, it should not rest immediately. By giving the teats of the animal milked the opportunity to close and dry completely before the animal's udder comes into contact with the lying area in a resting box 2, the risk of the udder being infected is minimized. This risk can also be obviated by taking care that the resting boxes are always adequately disinfected. To prevent that an animal milked enters a resting box 2 before one or two hours have elapsed after it was milked, the resting boxes are provided with the warning member 19, formed by a flash light, and an expelling member 20 which gives electric shocks to the animal. After the animals have proceeded to the feeding station and have eaten, they may thereafter go to a resting box. When the animals are to be milked thereafter again, the flash light warns them to leave the resting box. If they do not do so, they are given increasingly intensive electric shocks via the electric fence wire, until they leave the resting box. Since, using the cow identification system present in all the boxes, it can at all times be determined which animal is present at which instant in which box, an animal can always be driven at the proper instant from a given box to go to the milking box 10. The animal can be milked for 5 to 10 minutes with the aid of the computer system, whilst, with the aid of the computer system, an animal is encouraged to take food, to ruminate and to rest after milking for approximately 500 minutes, whereafter the computer system provides that this cycle is automatically repeated.

## Claims

1. A construction or a similar arrangement for automatically milking animals, such as cows, comprising a milking box (10) and a plurality of resting boxes (2), the construction furthermore comprising compelling means, characterized in that a resting box (2) includes the means (20) for compelling the animal resting in the resting box (2) to leave same and the resting box (2) includes a cow identification sensor (14) which, together with a transponder (15) to be carried by the animal, forms part of a cow identification system, the resting box (2) furthermore includes a warning member (19) for warning animals not to enter the resting box (2), or to warn an animal present in the resting box (2) to leave same.

2. A construction as claimed in claim 1, characterized in that the warning member (19) is constituted by a computer-controlled flashing light.

3. A construction as claimed in claim 2, characterized in that the flashing light (19) is screened off in such a manner that it is not visible in other resting boxes (2).

4. A construction as claimed in claim 2 or 3, characterized in that the flashing light (19) becomes operative when the animal present in the resting box (2) is to be milked.

5. A construction as claimed in any one of the preceding claims, characterized in that, if the animal has not left the resting box (2) a predetermined number of seconds after the warning member (19) has become operative, there is triggered an expelling member (20) giving electroshocks to the animal.

6. A construction as claimed in claim 5, characterized in that the intensity of the electroshocks can be increased automatically.

7. A construction as claimed in claim 5, characterized in that the electroshock-producing expelling member (20) is formed by a freely syspended electric fence (22) wire attached via a conical spring to a holder above the relevant resting box (2).

8. A construction as claimed in any one of claims 5 to 7, characterized in that the floor of the resting box (2) is provided with a ground plate (23).

9. A construction as claimed in any one of the preceding claims, characterized in that a resting box (2) includes a disinfecting implement (27, 28) for disinfecting the resting area after the animal has left the resting box (2).

10. A construction as claimed in claim 9, characterized in that a line (27) runs along the resting boxes (2) for the supply of a disinfecting liquid, whilst sprayers having a computer-controlled valve (28) are connected thereto.

11. A construction as claimed in any one of the preceding claims, characterized in that a power supply cable (24) as well as a process-control cable (25) for the individual resting boxes (2) are provided along the resting boxes (2).

12. A construction as claimed in claim 11, characterized in that a computer system is present for controlling via the process-control cables (25) a warning member (19) and/or an expelling member (20) and/or a disinfecting implement (27, 28) accommodated in a resting box (2).

13. A construction as claimed in any one of the preceding claims, characterized in that the resting boxes (2) are arranged along the outer wall of the construction.

14. A construction as claimed in claim 13, characterized in that the floor of a resting box (2) and also the outer wall of the construction near the resting box (2) are provided with a thermal insulation (17).

15. A construction as claimed in claim 13 or 14, characterized in that there are approximately eighty resting boxes (2).

16. A construction as claimed in any one of the preceding claims, characterized in that it includes a number, preferably eighty, of feeding stations (4, 5).

17. A construction as claimed in any one of the preceding claims, characterized in that it includes an area where the animals can walk about freely and from where they can reach the resting boxes (2), the feeding stations (4, 5) and the milking box (10).

18. A construction as claimed in any one of the preceding claims, characterized in that the milking box (10) includes at least one milking robot for automatically connecting teat cups to the teats of an animal and for automatically milking an animal.

19. A construction as claimed in any one of the preceding claims, characterized in that it includes a computer system, with the aid of which the animal can be milked for 5 to 10 minutes and with the aid of which an animal can be encouraged to take food, to ruminate and to rest for approximately 500 minutes, while walking about, computer-controlled means being present for automatically repeating this cycle.

## Patentansprüche

1. Vorrichtung oder ähnliche Anordnung zum automatischen Melken von Tieren, wie z. B. Kühen, mit einer Melkbox (10) und mehreren Ruheboxen (2), wobei die Vorrichtung ferner eine Austreibevorrichtung aufweist,
dadurch gekennzeichnet, daß eine Ruhebox (2) die Austreibevorrichtung (20) enthält, mittels der das in der Ruhebox (2) ruhende Tier gezwungen wird, diese zu verlassen, und daß die Ruhebox (2) einen Kuhidentifizierungssensor (14) aufweist, der zusammen mit einem von dem Tier zu tragenden Transponder (15) Teil eines Kuhidentifizierungssystems ist, wobei die Ruhebox (2) ferner eine Warneinrichtung (19) aufweist, um Tiere zurückzuhalten, die Ruhebox (2) zu betreten, oder um ein in der Ruhebox (2) befindliches Tier anzuhalten, die Box zu verlassen.

2. Vorrichtung nach Anspruch 1,
dadurch gekennzeichnet, daß die Warneinrichtung (19) durch ein rechnergesteuertes Blitzlicht gebildet ist.

3. Vorrichtung nach Anspruch 2,
dadurch gekennzeichnet, daß das Blitzlicht (19) derart abgeschirmt ist, daß es in anderen Ruheboxen (2) nicht sichtbar ist.

4. Vorrichtung nach Anspruch 2 oder 3,
dadurch gekennzeichnet, daß das Blitzlicht (19) aktiviert wird, wenn das in der Ruhebox (2) befindliche Tier zu melken ist.

5. Vorrichtung nach einem der vorhergehenden Ansprüche,
dadurch gekennzeichnet, daß eine Austreibevorrichtung (20) betätigt wird, die dem Tier Elektroschocks versetzt, wenn das Tier nach einer vorgegebenen Anzahl von Sekunden nach Aktivieren der Warneinrichtung (19) die Ruhebox (2) nicht verlassen hat.

6. Vorrichtung nach Anspruch 5,
dadurch gekennzeichnet, daß die Stärke der Elektroschocks automatisch zu steigern ist.

7. Vorrichtung nach Anspruch 5,
dadurch gekennzeichnet, daß die Elektroschocks erzeugende Austreibevorrichtung (20) durch einen freihängenden Elektrozaundraht (22) gebildet ist, der über eine konische Feder an einem Halter über der betreffenden Ruhebox (2) angebracht ist.

8. Vorrichtung nach einem der Ansprüche 5 bis 7,
dadurch gekennzeichnet, daß der Boden der Ruhebox (2) eine Erdungsplatte (23) aufweist.

9. Vorrichtung nach einem der vorhergehenden Ansprüche,
dadurch gekennzeichnet, daß eine Ruhebox (2) eine Desinfektionsvorrichtung (27, 28) aufweist, um den Ruhebereich zu desinfizieren, nachdem das Tier die Ruhebox (2) verlassen hat.

10. Vorrichtung nach Anspruch 9,
dadurch gekennzeichnet, daß zum Zuführen einer Desinfektionsflüssigkeit an den Ruheboxen (2) eine Leitung (27) entlanggeführt ist, an die Spritzdüsen mit einem rechnergesteuerten Ventil (28) angeschlossen sind.

11. Vorrichtung nach einem der vorhergehenden Ansprüche,
dadurch gekennzeichnet, daß ein Stromversorgungskabel (24) sowie ein Prozeßsteuerungskabel (25) für die einzelnen Ruheboxen (2) längs der Ruheboxen (2) angeordnet sind.

12. Vorrichtung nach Anspruch 11,
dadurch gekennzeichnet, daß ein Computersystem vorhanden ist, das über die Prozeßsteuerungskabel (25) eine in einer Ruhebox (2) angeordnete Warneinrichtung (19) und/oder Austreibevorrichtung (20) und/oder Desinfektionsvorrichtung (27, 28) steuert.

13. Vorrichtung nach einem der vorhergehenden Ansprüche,
dadurch gekennzeichnet, daß die Ruheboxen (2) an der Außenwand der Vorrichtung angeordnet sind.

14. Vorrichtung nach Anspruch 13,
dadurch gekennzeichnet, daß der Boden einer Ruhebox (2) und auch die Außenwand der Vorrichtung nahe der Ruhebox (2) eine Wärmeisolierung (17) aufweisen.

15. Vorrichtung nach Anspruch 13 oder 14,
dadurch gekennzeichnet, daß etwa achtzig Ruheboxen (2) vorhanden sind.

16. Vorrichtung nach einem der vorhergehenden Ansprüche,
dadurch gekennzeichnet, daß die Vorrichtung eine Anzahl von vorzugsweise achtzig Fütterungsstationen (4, 5) aufweist.

17. Vorrichtung nach einem der vorhergehenden Ansprüche,
dadurch gekennzeichnet, daß die Vorrichtung einen Bereich aufweist, in dem die Tiere frei umherlaufen können, und von dem aus sie zu den Ruheboxen (2), den Fütterungsstationen (4, 5) und der Melkbox (10) gelangen können.

18. Vorrichtung nach einem der vorhergehenden Ansprüche,
dadurch gekennzeichnet, daß die Melkbox (10) mindestens einen Melkroboter zum automatischen Anschließen von Zitzenbechern an die Zitzen eines Tieres und zum automatischen Melken eines Tieres aufweist.

19. Vorrichtung nach einem der vorhergehenden Ansprüche,
dadurch gekennzeichnet, daß die Vorrichtung ein Computersystem aufweist, mittels dessen das Tier 5 bis 10 Minuten lang zu melken ist, und mittels dessen ein Tier dazu zu bringen ist, Nahrung aufzunehmen, wiederzukäuen und etwa 500 Minuten lang zu ruhen oder umherzulaufen, wobei eine computergesteuerte Einrichtung vorhanden ist, um diesen Zyklus automatisch zu wiederholen.

## Revendications

1. Dispositif de traite automatique d'animaux, tels que des vaches, ou installation similaire, comprenant une stalle de traite (10) et une pluralitéde)stalles de repos (2), le dispositif comprenant en outre des moyens de contrainte, caractérisé en ce qu'une stalle de repos (2) comporte les moyens (20) pour contraindre l'animal se reposant dans la stalle de repos (2) à en sortir, et en ce que la stalle de repos (2) comporte un capteur (14) d'identification des vaches, lequel, ensemble avec un émetteur-récepteur (15) destiné à être porté par l'animal, fait partie d'un système d'identification des vaches, la stalle de repos (2) comportant en outre un organe avertisseur (19) pour prévenir les animaux de ne pas entrer dans la stalle de repos (2) ou pour prévenir un animal présent dans la stalle de repos (2) d'avoir à en sortir.

2. Dispositif selon la revendication 1, caractérisé en ce que l'organe avertisseur (19) est constitué par une lampe à éclats commandée par ordinateur.

3. Dispositif selon la revendication 2, caractérisé en ce que la lampe à éclats (19) est masquée latéralement de telle manière qu'elle n'est pas visible dans d'autres stalles de repos (2).

4. Dispositif selon la revendication 2 ou 3, caractérisé en ce que la lampe à éclats (19) entre en fonctionnement quand l'animal présent dans la stalle de repos (2) va devoir être trait.

5. Dispositif selon l'une quelconque des revendications précédentes, caractérisé en ce que, si l'animal n'est pas sorti de la stalle de repos (2) après un nombre prédéterminé de secondes après que l'organe avertisseur (19) est entré en fonctionnement, un organe expulseur (20) est déclenché, donnant des chocs électriques à l'animal.

6. Dispositif selon la revendication 5, caractérisé en ce que l'intensité des chocs électriques peut être augmentée automatiquement.

7. Dispositif selon la revendication 5, caractérisé en ce que l'organe expulseur (20) produisant des chocs électriques est formé d'un fil de clôture électrique (22) suspendu librement, attaché par un ressort conique à un support audessus de la stalle de repos (2) concernée.

8. Dispositif selon l'une quelconque des revendications 5 à 7, caractérisé en ce que le plancher de la stalle de repos (2) est muni d'une plaque (23) de mise à la terre.

9. Dispositif selon l'une quelconque des revendications précédentes, caractérisé en ce qu'une stalle de repos (2) comporte un dispositif de désinfection (27, 28) pour désinfecter la zone de repos après que l'animal est sorti de la stalle de repos (2).

10. Dispositif selon la revendication 9, caractérisé ence qu'un tuyau (27) passe le long des stalles de repos (2) pour l'apport d'un liquide désinfectant, tandis que des pulvérisateurs ayant une vanne (28) commandée par ordinateur sont reliés audit tuyau.

11. Dispositif selon l'une quelconque des revendications précédentes, caractérisé en ce qu'un câble (24) d'alimentation en énergie électrique, ainsi qu'un câble (25) de commande de process pour les stalles de repos (2) individuelles sont prévus le long des stalles de repos (2).

12. Dispositif selon la revendication 11, caractérisé en ce qu'un système informatique est présent pour commander, par des câbles (25) de commande de processus, un organe avertisseur (19) et/ou un organe expulseur (20) et/ou un dispositif de désinfection (27, 28) logés dans une stalle de repos (2).

13. Dispositif selon l'une quelconque des revendications précédentes, caractérisé en ce que les stalles de repos (2) sont disposées le long du mur extérieur du dispositif.

14. Dispositif selon la revendication 13, caractérisé en ce que le plancher d'une stalle de repos (2) et aussi le mur extérieur du dispositif près de la stalle de repos (2) sont munis d'une isolation thermique (17).

15. Dispositif selon la revendication 13 ou 14, caractérisé en ce qu'il y a environ quatre-vingts stalles de repos (2).

16. Dispositif selon l'une quelconque des revendications précédentes, caractérisé en ce qu'il comporte un certain nombre, de préférence, quatre-vingts, de postes d'alimentation (4, 5).

17. Dispositif selon l'une quelconque des revendications précédentes, caractérisé en ce qu'il comporteune zone dans laquelle les animaux peuvent marcher librement et depuis laquelle ils peuvent atteindre les stalles de repos (2), les postes d'alimentation (4, 5) et la stalle de traite (10).

18. Dispositif selon l'une quelconque des revendications précédentes, caractérisé en ce que la stalle de traite (10) comporte au moins un robot trayeur pour relier automatiquement des godets de trayons aux trayons d'un animal et pour traire un animal automatiquement.

19. Dispositif selon l'une quelconque des revendications précédentes, caractérisé en ce qu'il comporte un système informatique à l'aide duquel l'animal peut être trait pendant 5 à 10 minutes et à l'aide duquel un animal peut être encouragé à s'alimenter, à ruminer et à se reposer pendant environ 500 minutes, tout en marchant de part et d'autre, des moyens commandés par ordinateur étant présents pour répéter automatiquement ce cycle.
